# FASCICULE DE BREVET EUROPEEN

(11) **EP 2 048 004 B1**
(45) Date de publication et mention de la délivrance du brevet: **27.02.2013**
(21) Numéro de dépôt: 08017778.5
(22) Date de dépôt: 10.10.2008
(51) Int. Cl.: B60B 21/06, B60B 21/12

(54) **Jante pour cycle utilisant un manchon de raccordement et procédé de fabrication d`une telle jante**
Felge für Rad mit einer Anschlussmuffe und Herstellungsverfahren einer solche Felge
Cycle wheel rim using a connecting sleeve and method of manufacturing such a rim

(30) Priorité: 12.10.2007 FR 0707169
(43) Date de publication de la demande: 15.04.2009
(73) Titulaire: MAVIC S.A.S., 74370 Metz-Tessy (FR)
(72) Inventeur: Mercat, Jean-Pierre, 74960 Chavanod (DE)

(56) Documents cités:
- WO-A-02/40295
- WO-A-96/33876
- WO-A-98/03296
- JP-A- 1 262 201
- US-A- 5 653 510

## Description

L'invention se rapporte à la fabrication et l'assemblage de jantes pour cycles et plus particulièrement à une jante utilisant un manchon de raccordement et à son procédé de fabrication.

Les jantes et notamment celles destinées aux cycles, sont réalisées par un profilé cn aluminium ou alliage d'aluminium cintré. Dans la plupart des cas, elles sont reliées au moyeu par des nappes de rayons afin de constituer la roue du cycle. Les profilés utilisés peuvent être de différents types, mais ont généralement la forme d'un U, comprenant deux ailes latérales, dont les parois latérales comprennent parfois des faces de freinage contre lesquels les patins de frein exercent la pression de freinage.

Les jantes actuelles sont traditionnellement réalisées de façon connue en soi à partir d'un morceau de profilé d'une longueur déterminée, qui est cintré et dont les deux extrémités sont mises en contact et solidarisées. La rigidité de l'anneau ainsi réalisé est bien entendu fonction de la qualité du matériau utilisé pour réaliser le profilé initial et notamment sa résistance, qui est obtenue selon un procédé dit par filage ou par extrusion d'aluminium au travers d'une filière ayant les dimensions et les formes de la section du profilé à réaliser.

L'un des problèmes essentiels de la construction d'une jante est la réalisation de la liaison des extrémités après l'opération de cintrage. II existe différentes méthodes mais aucune ne donne entière satisfaction.

Un procédé très répandu consiste à assembler bout à bout les deux extrémités du morceau de profilé cintré, puis à réaliser une soudure par étincelage au niveau de la ligne de jonction. On obtient un cordon de soudure qu'il faut ensuite usiner puis brosser. Ces opérations sont difficiles à mettre en oeuvre sur des profils de jante assez complexes. Pour l'usinage, une fraise doit se déplacer tout autour du profil en suivant le cordon de soudure. Généralement, une fraise différente est utilisée pour supprimer les bourrelets sur les faces internes des ailes latérales et dans le fond de jante, sur lequel doit s'appuyer le pneumatique. Ces opérations réclament la mise en oeuvre de dispositifs spécifiques et adaptés. Un tel procédé est donc coûteux et n'est en fait utilisé que par certains constructeurs pour la fabrication de jante 'haut de gamme' seulement. De plus, les caractéristiques mécaniques de la jante peuvent être affectées en raison de l'opération de soudage qui cause un recuit du métal au niveau de la soudure en y abaissant localement la résistance. Le document WO 98/03296 décrit une méthode d'assemblage d'une jante par soudure.

Un autre procédé consiste à raccorder les deux extrémités par deux aiguilles latéralement espacées l'une de l'autre, et qui pénètrent dans des canaux latéraux prévus dans le profilé de la jante. Pour obtenir une bonne résistance de la jonction, l'ajustement doit être serré et il faut donc parfaitement maîtriser les tolérances dimensionnelles. De plus, les profilés de jante obtenus sont plus lourds en raison du surplus de matière pour chaque canal réalisé. De plus, ce procédé pose des problèmes de filage du profilé de jante qui est complexe à réaliser. Les vitesses de filage sont donc assez lentes afin d'obtenir les précisions géométriques et dimensionnelles nécessaires. Il faut aussi prévoir un appairage des goupilles de connexion afin de ne pas endommager les canaux et de bien maîtriser les efforts de serrage.

Un autre procédé consiste à réaliser le raccordement par manchonnage d'un tube creux et précontraint à l'intérieur de la section du profil de jante. Le tube a une forme sensiblement complémentaire de celle de la section interne du profilé. II est réalisé par filage dans un alliage léger habituellement à base d'aluminium. Par cette technique, il est difficile de maîtriser correctement les tolérances en dessous de 0,3 mm. Le profil de jante, quant à lui, est fabriqué par filage ou par extrusion et la tenue des tolérances est donc du même ordre de grandeur. Ainsi, il est difficile d'obtenir toujours le bon serrage du manchon dans la jante compte tenu de la dispersion des tolérances dimensionnelles de la jante et du manchon. Un autre inconvénient est que le tube a souvent une longueur supérieure à la longueur séparant deux lignes de perçages pour la pose des rayons. Il est donc nécessaire de fraiser des alésages dans le tube au niveau de ces lignes de perçage. Cette opération est difficile à réaliser pour des jantes très profilées destinées à l'usage de la compétition. Elle est en outre assez coûteuse. De plus, il est nécessaire d'utiliser des oeillets plus longs aux endroits de perçage du manchon pour tenir les rayons ; ce qui implique de gérer de plus nombreuses références de pièces dans la fabrication de la jante et est donc d'un coût supplémentaire.

Le brevet US 4,938,540 concerne une jante et son procédé de fabrication qui utilise une connexion par des aiguilles. Pour régler un problème d'étanchéité, on utilise une colle à l'intérieur des canaux dans lesquels sont insérées les aiguilles.

Le brevet FR 2733459, qui est considéré l'état de la technique le plus proche, propose de résoudre les problèmes de l'art antérieur en prévoyant la connexion d'une jante au moyen d'un manchon en deux parties expansibles et au moyen d'une vis. La vis provoque un écartement relatif des parties entre elles. Toutefois, un des problèmes rencontrés avec cette solution concerne la déformation du profil de la jante. En effet, l'effort appliqué de manière radiale afin de rattraper les jeux peut provoquer une déformation locale du pont transversal et/ou de la paroi de base inférieure de la jante, généralement effilée. Cette déformation peut affecter la maitrise de l'effort de serrage ainsi que les caractéristiques de résistance mécanique de la jante. Le manchon est aussi fait de deux pièces à écarter au moyen d'une vis ; ce qui rend la fabrication du manchon plus couteuse et manque de commodité au montage et au serrage. Enfin, la disposition de la vis ne permet pas de manchonner une jante de profil aplati ou basse car les deux parties du manchon n'ont alors pas assez de rigidité et de résistance et le manchon se trouve en plus affaibli par l'espace central.

Le but de l'invention est de proposer une solution améliorée qui résout les problèmes principaux de l'art antérieur.

Pour cela, l'invention concerne une jante pour cycle comprenant un profilé de révolution ayant en section radiale la forme d'un caisson creux, avec deux faces d'extrémités raccordées l'une à l'autre, bout à bout, selon une ligne de jonction, et solidarisées par l'intermédiaire d'un manchon inséré dans le caisson creux du profilé, de part et d'autre de la ligne de jonction, le manchon comprenant au moins deux portions d'appui du manchon qui exercent des forces d'appui à l'intérieur et contre les parois du caisson creux, engendrée par écartement relatif des dites portions entre elles au moyen d'au moins un organe d'écartement.

Selon un premier aspect inventif, l'organe d'écartement est configuré en association avec les portions d'appui de façon à diriger les forces d'appui selon une direction essentiellement latérale vers les parois latérales de la jante. Ainsi, les efforts exercés par le manchon sont dirigés de manière à engendrer le moins de déformation possible de la jante. En particulier, les parois latérales de la jante ou « flancs » supportent mieux les efforts de déformation du fait qu'elles sont généralement plus courtes et plus rigides et renforcées par au moins un pont transversal. Il est même avantageux d'avoir un manchon avec des portions d'appui qui exercent un effort plus important contre la portion inférieure des parois latérales à la jonction des bords latéraux de la jante plutôt que contre la portion supérieure des parois latérales à la jonction du pont supérieur de la jante. Par « portion inférieure », on entend la portion la plus éloignée du fond de jante par opposition à la « portion supérieure » qui est la portion la plus rapprochée du fond de jante. Lorsque les efforts d'appui s'exercent sur la portion inférieure du flanc de la jante, il en résulte un moindre risque d'écartement des bords d'accrochage du pneumatique sur la jante. En particulier, la portion inférieure peut être plus épaisse que les autres parois de la jante afin d'assurer la résistance à l'arrachement des rayons raccordés à cette paroi.

Selon un aspect de l'invention, l'organe d'écartement procure un engagement irréversible dans au moins un espace entre les deux portions d'appui. Par engagement « irréversible » on entend un engagement qui est stable sans désengagement spontané dans l'espace entre les deux portions d'appui. Selon un principe de l'invention, l'irréversibilité de l'engagement peut être obtenue par différents types d'organes d'écartement.

Dans un mode possible, l'irréversibilité de l'engagement est obtenue par l'organe d'écartement qui est un moyen de coincement inséré en force entre les deux portions d'appui. Ce moyen de coincement est configuré de manière à créer des forces de frottements qui suffisent à s'opposer au désengagement du moyen de coincement dans l'espace entre les portions d'appui. Le moyen de coincement comprend des surfaces d'engagement qui forment un angle non nul entre elles lequel procure l'irréversibilité par frottement de la liaison de contact avec les surfaces de contact des portions d'appui.

Dans un autre mode possible, l'irréversibilité de l'engagement est obtenue au moyen d'au moins une vis d'écartement.

Dans un autre mode possible, l'irréversibilité de l'engagement peut être obtenue par soudage d'une pièce entre et sur les surfaces de deux portions d'appui. Par exemple, une pièce formant un coin peut être utilisée. Le soudage peut être obtenu par vibration ou par friction comme, par exemple, par un soudage piézoélectrique. La méthode consiste à engager le coin entre les surfaces des portions d'appui et de réaliser ensuite le soudage au contact des surfaces du coin contre les surfaces des portions d'appui.

Dans un autre mode, une liaison de contact irréversible est obtenue par un organe d'écartement formé par un élément déformable en métal qui est déformé dans l'espace entre les portions d'appui jusque dans le domaine plastique du matériau. Cela procure l'avantage de pouvoir compenser une plage importante d'écarts dimensionnels dans la jante sans devoir appliquer des efforts de déformation trop importants contrairement au domaine élastique du matériau où la variation entre les écarts et les efforts est linéaire. Un tel élément peut avoir une forme en U ou en V. Il peut être inséré jusqu'à atteindre la plage de déformation plastique une fois mis en place entre les portions d'appui.

Selon un mode de réalisation de l'invention, les portions d'appui du manchon sont reliées entre elles par au moins une portion de rétrécissement. La portion de rétrécissement favorise l'expansion du manchon par écartement des portions d'appui. La portion de rétrécissement s'écarte dans une limite de plage élastique ou plastique. La portion de rétrécissement peut être comprise entre environ 0.5 et 2 mm, ou encore, 0.9 et 1 mm.

Selon une autre caractéristique, les portions d'appui sont partiellement séparées par au moins une lumière longitudinale s'étendant jusqu'à la portion de rétrécissement. La lumière longitudinale est, par exemple, dimensionnée entre 1 et 10 mm, ou encore entre 1.2 et 8 mm. La lumière permet ainsi l'écartement des portions d'appui l'une par rapport à l'autre en direction des flancs de la jante. La lumière peut ainsi s'étendre de manière sensiblement parallèle aux parois latérales de la jante. Elle peut se situer sensiblement dans le plan médian radial de la jante ou être légèrement décalée par rapport à celui-ci. Notamment, la lumière peut être décalée lorsque la section de la jante est asymétrique.

La lumière longitudinale peut être ouverte en direction opposée par rapport au pont transversal de la jante. Ce mode présente l'avantage d'exercer moins d'efforts sur les portions externes de la jante qui reçoivent le pneumatique et de plus grands efforts de serrage du manchon sur la jante à la jonction entre la paroi latérale et le fond de jante. Toutefois, dans un autre mode possible, la lumière longitudinale est ouverte en direction du pont transversal de la jante.

Dans un mode de réalisation, l'organe d'écartement prend la forme d'au moins un coin. Par le terme « coin », on entend tout moyen ou pièce de coincement comprenant des surfaces de contact formant un certain angle d'inclinaison entre elles et permettant de réaliser un certain écartement de deux surfaces sensiblement opposées lors de l'engagement forcé du moyen ou pièce de coincement entre ces deux surfaces et réaliser ainsi un coincement irréversible sans possibilité de retrait spontané. Ainsi, le coin peut être inséré dans une lumière ou passage formé entre les portions d'appui. Dans un premier mode, le coin a une section de forme sensiblement trapézoïdale ou conique. L'angle de cône du coin est généralement déterminé en fonction du coefficient de frottement du matériau qui détermine le cône de frottement +ϕ et - ϕ de sorte que le demi-angle du coin soit en général inférieur à la valeur ϕ. Ainsi, pour un coin en métal tel qu'en alliage d'aluminium, par exemple, les deux surfaces de contact du coin forment entre elles un angle de cône compris, par exemple, entre 2 et 14 degrés de manière à procurer un coincement irréversible sans désengagement possible.

Dans un autre mode possible, l'organe d'écartement est formé d'au moins une vis d'écartement. Ainsi, les portions d'appui du manchon sont écartées au moyen d'une vis qui s'engage dans lesdites portions et les repoussent contre les parois internes de la jante. En particulier, la vis présente une longueur de tige filetée qui coopère avec une longueur d'alésage taraudé ménagée sur chaque portion d'appui du manchon.

Dans un mode possible, les portions d'appui et la portion de rétrécissement du manchon forment une seule pièce intégrale. Le manchon peut ainsi être fabriqué selon un profil sensiblement constant. Il peut être fait en métal tel qu'en alliage d'aluminium ou encore en titane ou alliage de titane ou encore en bois ou en matériau plastique tel qu'en matériau thermoplastique injecté. Lorsqu'il est réalisé en métal, il peut être fabriqué par filage ou extrusion à bas coût et tronçonné à la longueur voulue. Le manchon peut aussi être cintré à la courbure de la jante afin de faciliter l'assemblage dans la jante.

Selon une caractéristique possible, chaque portion d'appui comprend une portion de base s'étendant le long de la paroi de flanc de la jante et une portion d'extrémité effilée qui s'insère dans le caisson à l'intersection de la paroi de flanc et du pont transversal de la jante. Dans un mode possible, la portion d'extrémité effilée et la portion de base se raccordent entre elles par une portion rétrécie formant une charnière. Ainsi sous l'effet de la pression de l'organe d'écartement, la portion effilée tend à fléchir au niveau de la charnière de sorte que le manchon se positionne en tension dans la jante en rattrapant les jeux. Une telle configuration contribue au rattrapage de jeux tout en réduisant les efforts nécessaires à la mise en tension du manchon dans la jante.

Dans un mode possible, les portions d'appui forment deux portions séparées et espacées du manchon. Un organe d'écartement est utilisé dans l'espace entre les deux portions d'appui pour écarter les portions d'appui et procurer une liaison d'écartement irréversible.

L'invention se rapporte aussi à une jante pour cycle comprenant un profilé de révolution ayant en section radiale la forme d'un caisson creux, avec deux faces d'extrémités raccordées l'une à l'autre, bout à bout, selon une ligne de jonction, et solidarisées par l'intermédiaire d'un manchon inséré dans le caisson creux du profilé, de part et d'autre de la ligne de jonction, le manchon comprenant des portions d'appui du manchon qui exercent une pression interne à l'intérieur et contre les parois du caisson creux, engendrée par écartement relatif des dites portions entre elles au moyen d'au moins un organe d'écartement, caractérisé en ce que l'organe d'écartement est un organe de coincement qui procure un écartement et un coincement irréversible entre les portions d'appui.

L'invention se rapporte aussi à une roue d'un cycle comprenant une jante selon l'invention.

L'invention se rapporte aussi à un procédé de fabrication d'une jante comprenant :
- le cintrage d'un profilé métallique comprenant en section radiale en forme de caisson jusqu'à former un cercle ouvert de jante;
- le montage d'un manchon expansible à l'intérieur de chaque extrémité libre de la j ante;
- l'expansion du manchon en exerçant un effort de poussée essentiellement latérale sur le manchon et,
- le rapprochement des extrémités du profilé jusqu'à la mise en butée des extrémités de jante.

Selon un mode de la méthode de l'invention, l'effort de poussé latérale exercé par le manchon est plus important à l'intersection entre le fond de la jante et la paroi latérale de la jante qu'à l'intersection entre le pont et la paroi latérale de la jante. L'avantage est essentiellement de concentrer les efforts dans une région de plus grande rigidité de la jante et ainsi de limiter la déformation de la jante.

En particulier, le montage du manchon se fait en laissant libre, entre les deux extrémités de la jante, une portion de lumière dans le manchon, dans laquelle s'insère le coin. Le coin est, par exemple, pressé sur sa face libre à l'intérieur du manchon à l'aide d'une presse comme une presse assistée d'un vérin hydraulique ou mécanique. Compte tenu de la pression exercée sur le manchon lors de cette opération, l'appui est préférablement soutenu sur la face opposée du manchon lors du pressage. La portion débordante du coin est ensuite découpée après insertion sous presse du coin dans le manchon.

Dans un mode différent du procédé selon l'invention, l'effort de poussée latérale sur le manchon se fait au moyen d'une vis qui écarte latéralement deux portions d'appui du manchon.

D'autres caractéristiques et avantages de l'invention ressortiront des dessins annexés.
La figure 1 est une vue en plan d'une jante assemblée selon l'invention.
La figure 2 est une vue partielle en coupe selon le plan 1-1 de la jante de la figure 1.
La figure 3 est une en coupe longitudinale selon le plan II-II de la jante de la figure.
La figure 4 est une vue en coupe I-I lors du montage.
La figure 5 est une vue en coupe I-I après montage sur une jante avec parois aux tolérances maximales.
La figure 6 est une vue en coupe I-I après montage sur une jante avec parois aux tolérances minimales.
La figure 7 est une vue en coupe II-II de l'opération d'insertion du coin dans le manchon.
La figure 8 est une vue en coupe II-II de l'opération de montage après découpe du coin et avant rapprochement des extrémités de la jante.
La figure 9 est une vue en coupe selon I-I d'une variante de la jante selon l'invention avant expansion du manchon.
La figure 10 est une vue en coupe selon I-I d'une variante de la jante selon l'invention après expansion du manchon.
La figure 11 une vue en coupe I-I d'un troisième mode de réalisation de l'invention avant montage.
La figure 12 est vue en coupe I-I d'un troisième mode de réalisation de l'invention après montage.
La figure 13 est une vue en coupe I-I d'un quatrième mode de réalisation de l'invention avec un manchon en deux parties d'appui séparées.
La figure 14 est une vue en coupe I-I d'un cinquième mode de réalisation de l'invention avec un manchon comprenant des portions d'appui dans un matériau autre que le métal.

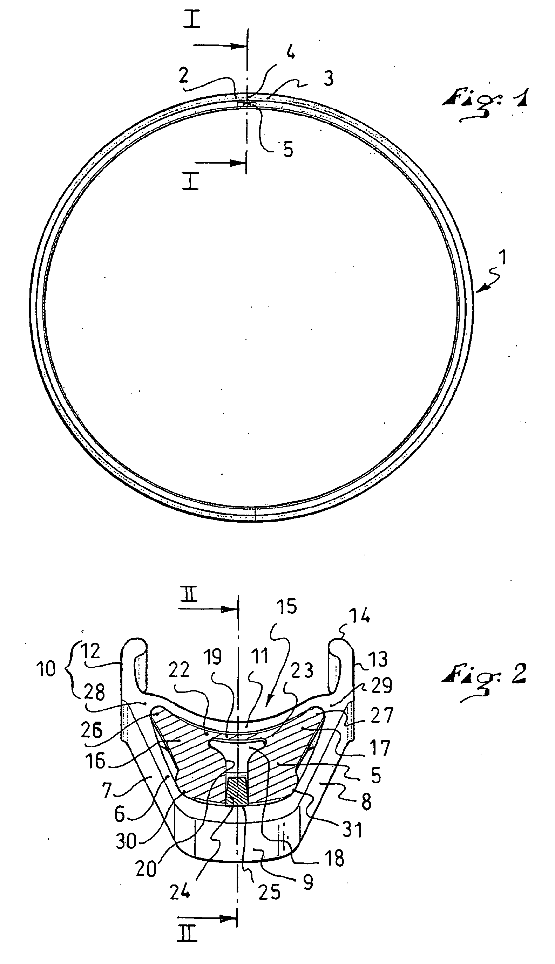

La jante 1 selon l'invention illustrée à la figure 1 est constituée d'un profilé de révolution ayant la forme d'un anneau de grand diamètre, construit à partir d'un segment cintré possédant deux extrémités 2, 3 dont les faces sont raccordées l'une à l'autre et bout à bout selon une ligne de jonction 4. Le raccordement se fait par un manchon 5 de faible longueur et qui ne dépasse pas, en principe, la longueur d'arc séparant deux lignes de perçage dans la jante de deux rayons voisins. Le manchon se répartit idéalement, à égale longueur, de part et d'autre de la ligne de jonction 4, à l'intérieur du caisson de la jante. Le manchon est dans un état de tension à l'intérieur de la jante de façon à produire une retenue des deux extrémités de la jante bout à bout.

La figure 2 montre la jante de la figure 1 dans le plan radial I-I au niveau de la ligne de jonction 4. La jante comprend un caisson creux 6 délimité par plusieurs parois dont deux parois latérales ou flancs 7, 8 qui se rejoignent intérieurement par une paroi de fond plus épaisse 9, côté interne de jante ou moyeu, pour former un profil en forme de « U » ou de « V ». A la base supérieure 10, les flancs 7, 8 sont reliés par un pont transversal 11. La forme du pont transversal peut être légèrement concave. La base supérieure comprend des parois libres 12, 13 se terminant par des bords élargis 14 adaptés à favoriser la retenue interne du pneumatique. Les bords élargis forment ainsi une cuvette de révolution 15 pour recevoir un pneumatique.

A l'intérieur du caisson creux 6 est ainsi disposé un manchon 5 selon l'invention. Il comprend des portions d'appui 16, 17 mises sous tension, au moins partiellement, contre les surfaces internes des flancs 7, 8. Les deux portions 16, 17 sont reliées par une portion de raccordement 19 de plus faible section que les portions 16, 17. La portion de raccordement 19 s'étend transversalement entre les deux portions d'appui 16, 17 latérales. La portion de raccordement 19 forme donc une portion de rétrécissement qui délimite avec les deux autres portions 16, 17, une lumière longitudinale 20 qui s'ouvre vers le bas en direction de la paroi de fond 9. De plus, la lumière s'évase en forme de « T » vers la paroi de pont 19, par une cavité 18 s'étendant transversalement, de manière à créer deux charnières 22, 23 disposées entre la portion de raccordement 19 et les portions d'appui 16, 17. La lumière 20 est partiellement occupée par un organe d'écartement du manchon sous la forme d'un coin 24 inséré à l'entrée de celle-ci et qui s'étend sur une partie au moins de la hauteur de la lumière.

L'organe d'écartement en forme de coin 24 a une forme sensiblement trapézoïdale avec des surfaces latérales convergentes. Les dimensions (notamment, l'angle d'inclinaison des surfaces convergentes) et la forme du coin sont choisies de manière à produire des forces d'écartement suffisantes sur les faces internes des portions d'appui 16, 17. Ainsi, la base 25 du coin est sensiblement plus large que la largeur de la lumière 20 à son entrée. La lumière 20 possède, par exemple, une largeur sensiblement constante. Les portions d'appui sont ainsi repoussées sensiblement vers les surfaces internes des flancs 7, 8 mais aussi autour des charnières 22, 23. Ainsi, les arêtes supérieures 26, 27 du manchon sont mises en tension contre les zones d'intersection 28, 29 des flancs et du pont. Les bords externes des extrémités libres des portions d'appui possèdent des bossages 30, 31 qui appliquent une contrainte localisée près de l'intersection entre les flancs 7, 8 et la paroi de fond 9. Cette contrainte F₁ s'oriente essentiellement latéralement vers l'extérieur et provoque une réaction résultante F₀ orientée vers l'intérieur du manchon et perpendiculairement à la tangente à la ligne de contact du bossage sur la paroi de jante. Cette réaction est sensiblement inclinée par rapport à la direction latérale de la jante d'un angle θ préférablement inférieur à 45 degrés, par exemple, de l'ordre de 15 degrés. Il se produit aussi sur les arêtes supérieures 26, 27, des forces F₂ de tension qui favorise le blocage du manchon et par conséquent la retenue des extrémités de jante l'une contre l'autre.

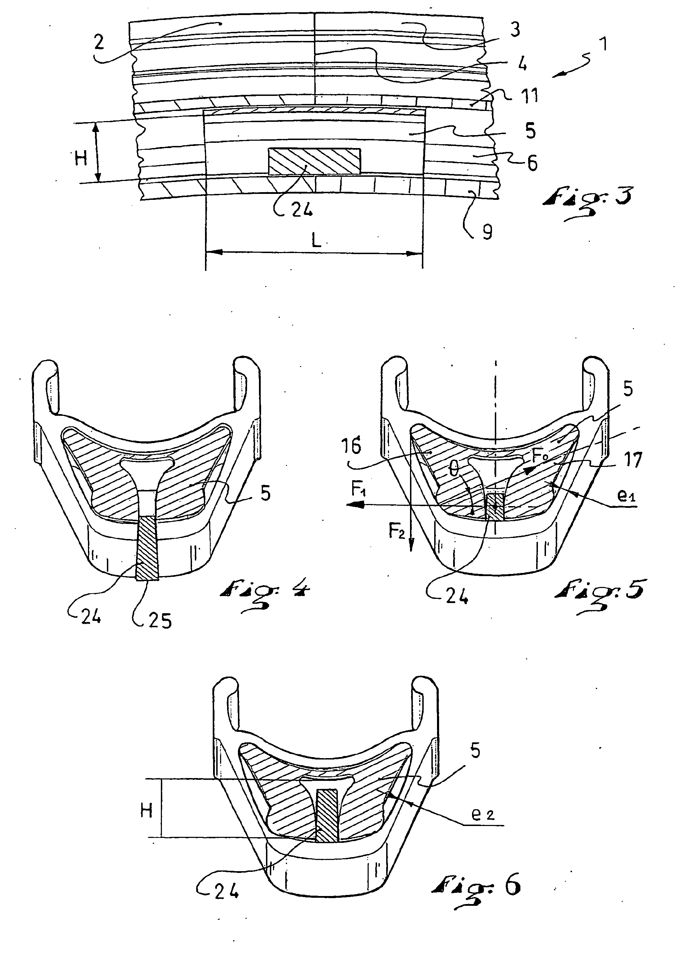

La figure 3 montre la jante 1 en état de montage avec le manchon 5 sous tension qui raccorde les deux extrémités 2, 3 au niveau de la ligne de jonction 4. La lumière s'étend, par exemple, sur toute la longueur du manchon ; de manière à rendre le manchon déformable sur toute sa longueur. L'organe d'écartement en forme de coin peut s'étendre sur une partie au moins de la longueur du manchon. Par exemple, l'organe d'écartement recouvre au moins 10% de la longueur L de la lumière, par exemple, au moins 25% de la longueur L de la lumière. L'organe en forme de coin peut avoir une section longitudinale rectangulaire ou toute autre forme adaptée. L'organe d'écartement 24 peut être inséré sur une partie seulement de la hauteur H de la lumière sans toutefois entrer au contact du fond de celle-ci ; de façon à éviter de créer un système hyperstatique.

Les figures 4 à 8 montrent le principe d'assemblage de la jante selon l'invention. La jante est réalisée, de manière connue à partir d'un segment de profilé en aluminium ou en alliage d'aluminium cintré. Dans une étape préalable de filage ou d'extrusion, on réalise une barre ayant un profil initial par le passage du métal dans une filière (non représentée). On cintre la barre en plusieurs spires puis on découpe ensuite les jantes au bon développé. Dans une étape suivante, les extrémités de chaque jante sont mises bout à bout.

Selon un premier mode de réalisation du procédé de l'invention, après l'opération de cintrage, on raccorde chaque extrémité 2, 3 du segment en insérant un manchon 5, tel que décrit précédemment, à l'intérieur de la section creuse.

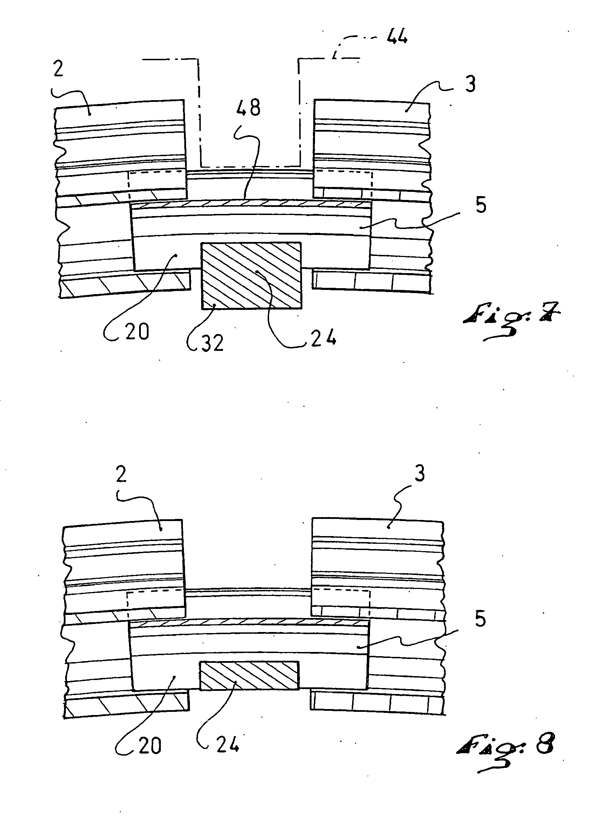

Le manchon 5 est monté dans un état d'écartement minimal des portions d'appui afin de permettre un certain rapprochement des extrémités 2, 3 laissant toutefois la lumière du manchon partiellement dégagée. Le dégagement partiel de la lumière permet le pré-positionnement de l'organe d'écartement en forme de coin 24 comme le montrent les figures 4 et 7. Une fois placé, l'organe d'écartement est inséré en force de manière à réaliser l'écartement des portions d'appui 16, 17. L'insertion en force peut être réalisée au moyen d'une presse. Afin d'éviter la déformation du manchon et procurer une contre-pression lors du pressage, un élément de soutien 44 est au contact sur la face supérieure 48 du manchon. La force d'insertion de l'organe d'écartement est fonction de la géométrie et des dimensions du manchon et de la jante et des jeux et tolérances à rattraper. On peut considérer la force exercée par la presse de l'ordre 200 daN. Avant de rapprocher les extrémités de la jante l'une contre l'autre, la partie en relief, non-insérable 32 du coin 24 est découpée ou usinée. La jante se trouve alors dans l'état de la figure 8. La dernière étape consiste à rapprocher les extrémités 2, 3 de la jante au moyen d'une presse en enveloppant la jante.

La figure 5 montre une première jante comprenant une épaisseur de parois latérales e₁ correspondant à des tolérances maximales, par exemple, une épaisseur de l'ordre de 0.9 mm.

La figure 6 montre une seconde jante comprenant une épaisseur de parois latérales e₂ correspondant à des tolérances minimales, par exemple, une épaisseur de l'ordre de 0.75 mm. Ainsi, le dispositif de l'invention permet de rattraper les tolérances maximales et minimales en utilisant les mêmes éléments. Dans le cas de la jante aux tolérances maximales de la figure 5, un plus faible rattrapage de jeux conduit à un moindre degré d'introduction du coin dans la lumière du manchon. Inversement, pour la jante aux tolérances minimales de la figure 6, un plus grand rattrapage de jeux est nécessaire qui conduit à un plus grand degré d'introduction du coin dans la lumière et donc une plus grande hauteur du coin au final dans le manchon.

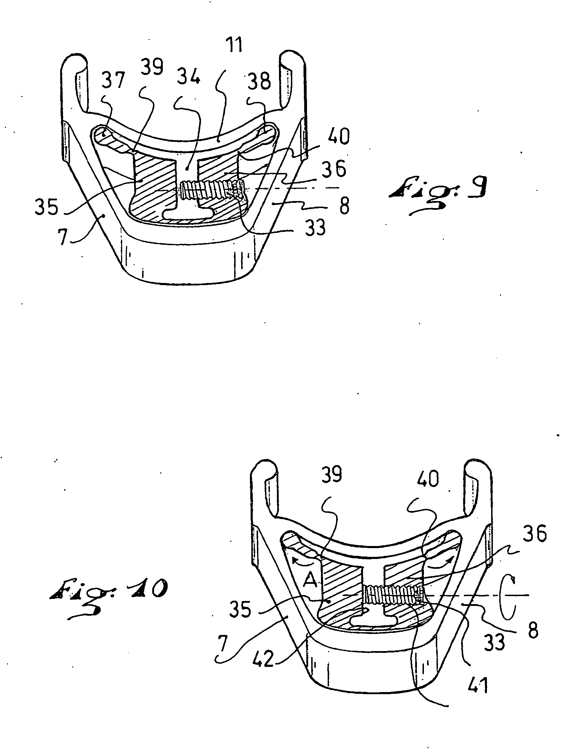

Les figures 9 et 10 montrent une variante de l'invention dans laquelle l'organe d'écartement en forme de coin est remplacé par une vis d'écartement 33. Le profil du manchon peut être identique au profil du mode antérieur ou être différent comme illustré. Dans le cas illustré, le manchon comprend une lumière 34 formée entre les portions d'appui 35, 36 qui s'ouvre en direction du pont 11. Les portions d'appui 35, 36 se prolongent aussi par des portions d'extrémité effilées 37, 38 en direction de l'intersection entre le pont et les flancs 7, 8 de la jante. De plus entre les portions d'extrémité 37, 38 et les portions d'appui 35, 36 sont disposées des portions de rétrécissement 39, 40 formant des charnières. La portion de vis 33 s'engage ainsi dans une portion filetée 41 d'une des portions 36 et prend appui au serrage contre la surface interne 42 de la portion d'appui opposée 35 comme le montre la figure 9. Il en résulte un écartement des deux portions d'appui en direction des flancs de la jante et un certain basculement selon une direction A des portions d'extrémité 37, 38 autour des portions de charnière 39, 40. Bien entendu, plusieurs vis peuvent servir d'organe d'écartement sur le manchon qui peuvent être distribuées sur la longueur et/ou la hauteur de la portion de lumière du manchon.

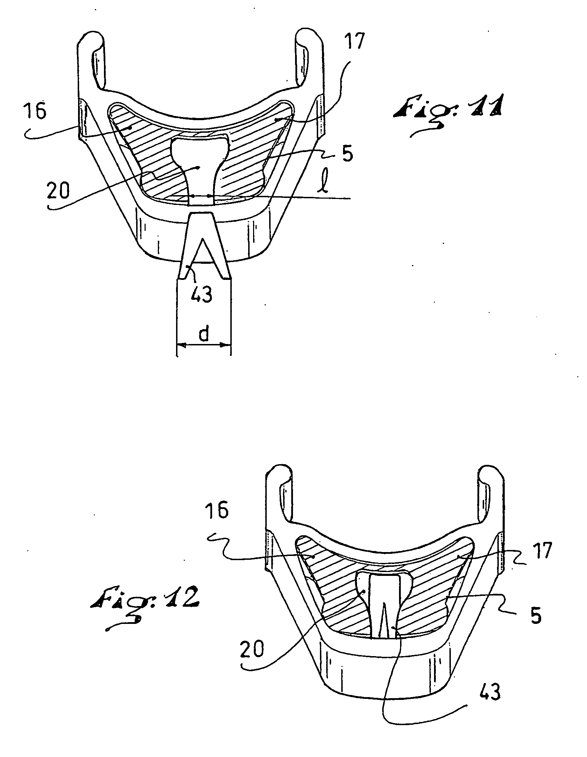

Les figures 11 et 12 illustrent un autre mode de réalisation dans lequel le manchon 5 est mis sous tension dans le caisson de la jante au moyen d'un organe d'écartement en forme de coin qui est un élément déformable 43. L'élément déformable comprend au moins une portion apte à subir une déformation, de préférence en atteignant le domaine d'allongement plastique, lors de l'insertion dans la lumière 20 entre les deux portions d'appui 16, 17. Par exemple, l'élément possède une section en forme de « U » ou de « V » renversé dont la distance « d » entre les extrémités des branches est supérieure à la largeur « 1 » de la lumière 20. Afin d'obtenir des efforts de tension suffisants contre les portions d'appui et compenser les tolérances (de l'ordre de 0.5 mm), il est préféré d'utiliser un élément en métal tel que, par exemple, un alliage d'aluminium, par exemple, ou un alliage de zinc tel que du Zamac® ou un acier qui se déforme en atteignant le domaine d'allongement plastique de l'élément. Le manchon peut aussi être fait en matériau tel qu'un alliage d'aluminium ou de zinc.

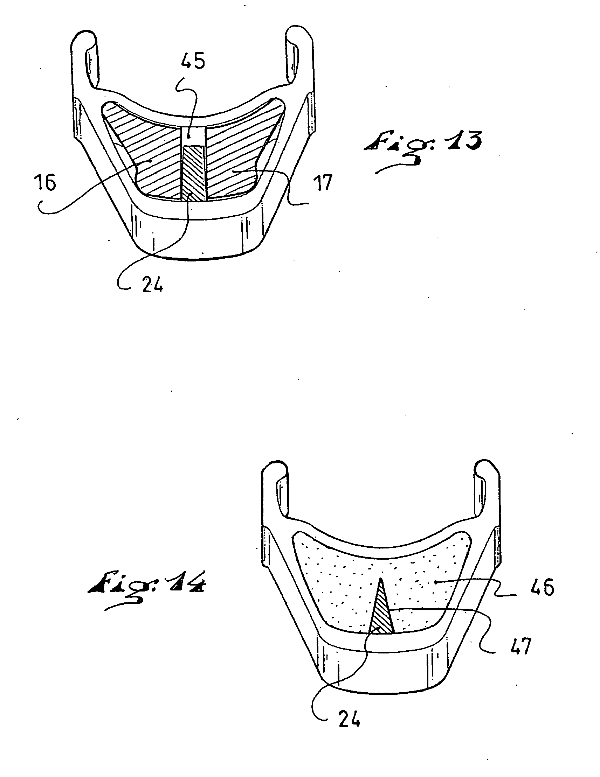

La figure 13 montre un mode de réalisation dans lequel le manchon est formé de deux portions d'appui 16, 17 qui forment deux pièces séparées. Les deux portions sont séparées dans un espace 45 occupé au moins partiellement par un organe d'écartement tel qu'un coin 24 ou encore une vis.

La figure 14 montre une variante dans laquelle le manchon forme un corps expansible 46 dans un matériau tel que du bois ou encore un plastique. Une fente 47 est réalisée dans le corps pour permettre l'introduction d'un organe d'écartement 24. L'organe d'écartement est un coin. Il peut être en tout matériau approprié tel qu'en métal, plastique ou bois.

L'invention n'est pas limitée aux seuls modes de réalisation décrits et peut recouvrir de nombreuses modifications. Par exemple, les portions d'appui du manchon peuvent être deux ou plusieurs portions séparées.

## Revendications

1. Jante pour cycle comprenant un profilé de révolution (1) ayant en section radiale la forme d'un caisson creux, avec deux faces d'extrémités raccordées l'une à l'autre, bout à bout, selon une ligne de jonction, et solidarisées par l'intermédiaire d'un manchon inséré dans le caisson creux du profilé, de part et d'autre de la ligne de jonction, le manchon (5) comprenant au moins deux portions d'appui (16, 17) du manchon qui exercent une pression interne à l'intérieur et contre les parois du caisson creux, engendrée par écartement relatif des dites portions entre elles au moyen d'au moins un organe d'écartement, **caractérisée en ce que** l'organe d'écartement (24, 33, 43) est configuré en association avec les portions d'appui (16, 17) de façon à diriger les forces d'appui selon une direction essentiellement latérale vers les parois latérales (7, 8) de la jante.

2. Jante selon la revendication 1, **caractérisée en ce que** l'organe d'écartement procure un engagement irréversible dans au moins un espace (20, 45) entre les deux portions d'appui (16,17).

3. Jante selon la revendication 2, **caractérisée en ce que** les portions d'appui (16, 17) sont reliées entre elles par au moins une portion de rétrécissement (19).

4. Jante selon la revendication 3, **caractérisée en ce que** les portions d'appui sont partiellement séparées par au moins une lumière longitudinale (20) s'étendant jusqu'à la portion de rétrécissement (19).

5. Jante selon la revendication 4, **caractérisée en ce que** la lumière longitudinale (20) est ouverte en direction du pont transversal (19) de la jante.

6. Jante selon la revendication 4, **caractérisée en ce que** la lumière longitudinale (20) est ouverte en direction opposée au pont transversal (19) de la jante.

7. Jante selon l'une quelconque des revendications 2 à 6, **caractérisée en ce que** les portions d'appui (16, 17) et la portion de rétrécissement (19) forment une seule pièce intégrale.

8. Jante selon la revendication 2, **caractérisée en ce que** les portions d'appui forment deux portions séparées et espacées du manchon.

9. Jante selon l'une quelconque des revendications 2 à 8, **caractérisée en ce que** l'organe d'écartement (24, 43) est au moins un coin inséré dans une lumière formée entre les portions d'appui.

10. Jante selon la revendication 9, **caractérisée en ce que** le coin (24) a une section de forme sensiblement trapézoïdale ou conique.

11. Jante selon la revendication 10, **caractérisée en ce que** les surfaces d'engagement du coin forment un angle de cône compris entre 2 et 14 degrés.

12. Jante selon l'une quelconque des revendications 2 à 8, **caractérisée en ce que** l'organe d'écartement est formé d'au moins une vis d'écartement (43).

13. Jante selon l'une quelconque des revendications précédentes **caractérisée en ce que** chaque portion d'appui (16, 17) comprend une portion de base s'étendant le long de la paroi de flanc de la jante et une portion d'extrémité effilée (26, 27, 37, 38) qui s'insère dans le caisson à l'intersection de la paroi de flanc et du pont transversal de la jante.

14. Jante selon la revendication 13, **caractérisée en ce que** la portion d'extrémité effilée (37, 38) et la portion de base (35, 36) se raccordent entre elles par une portion rétrécie formant une charnière (39, 40).

15. Jante pour cycle comprenant un profilé de révolution (1) ayant en section radiale la forme d'un caisson creux, avec deux faces d'extrémités raccordées l'une à l'autre, bout à bout, selon une ligne de jonction, et solidarisées par l'intermédiaire d'un manchon inséré dans le caisson creux du profilé, de part et d'autre de la ligne de jonction, le manchon (5) comprenant des portions d'appui (16, 17) du manchon qui exercent une pression interne à l'intérieur et contre les parois du caisson creux, engendrée par écartement relatif des dites portions d'appui entre elles au moyen d'au moins un organe d'écartement, **caractérisée en ce que** les deux portions d'appui (16, 17) sont reliées par une portion de raccordement (19) de plus faible section que les deux portions d'appui (16, 17) et **en ce que** l'organe d'écartement est un organe de coincement (5, 43) qui procure un écartement latérale et un coincement irréversible entre les portions d'appui (16, 17)..

16. Roue d'un cycle comprenant une jante selon l'une quelconque des revendications précédentes.

17. Procédé de fabrication d'une jante comprenant :
- le cintrage d'un profilé métallique comprenant en section radiale en forme de caisson jusqu'à former un cercle ouvert de jante;
- le montage d'un manchon expansible (5) à l'intérieur de chaque extrémité libre de la jante;
- l'expansion du manchon en exerçant un effort de poussée essentiellement latérale sur le manchon et,
- le rapprochement des extrémités (2, 3) du profilé jusqu'à la mise en butée des extrémités de jante.

18. Procédé selon la revendication 17, **caractérisé en ce que** l'effort de poussée latérale exercé par le manchon est plus important à l'intersection entre le fond de la jante et la paroi latérale de la jante qu'à l'intersection entre le pont et la paroi latérale de la jante.

19. Procédé selon les revendications 17 ou 18, **caractérisé en ce que** l'effort de poussé latérale sur le manchon se fait au moyen d'au moins un coin (5, 43) inséré dans une lumière (20) du manchon.

20. Procédé selon les revendications 17, 18 ou 19, **caractérisé en ce que** le montage du manchon se fait en laissant libre entre les deux extrémités de la jante, une portion de lumière dans le manchon, dans laquelle s'insère le coin.

21. Procédé selon l'une quelconque des revendications 17 à 20, **caractérisé en ce que** le coin est pressé dans le manchon (5) à l'aide d'une presse.

22. Procédé selon la revendication 17, **caractérisé en ce que** le coin est un élément déformable (43).

23. Procédé selon la revendication 22, **caractérisé en ce que** la déformation de l'élément déformable atteint le domaine d'allongement plastique du matériau le constituant.

24. Procédé selon la revendication 21, **caractérisé en ce que** la portion débordante (32) du coin est découpée après insertion sous presse du coin dans le manchon.

25. Procédé selon la revendication 17, **caractérisé en ce que** l'effort de poussée latérale sur le manchon se fait au moyen d'au moins une vis (33) qui écarte latéralement deux portions d'appui du manchon.

## Claims

1. Rim for cycle comprising a section piece of revolution (1) having, in radial section, the shape of a hollow chamber, with two end faces connected to one another, end-to-end, along a line of junction, and secured by means of a sleeve inserted into the hollow chamber of the section piece, on either side of the line of junction, the sleeve (5) comprising at least two bearing portions (16, 17) of the sleeve which exert an internal pressure inside and against the walls of the hollow chamber, generated by the relative separation of the said portions from one another by means of at least one separating member, **characterized in that** the separating member (24, 33, 43) is configured in association with the bearing portions (16, 17) so as to direct the bearing forces in an essentially lateral direction towards the lateral walls (7, 8) of the rim.

2. Rim according to Claim 1, **characterized in that** the separating member procures an irreversible engagement in at least one space (20, 45) between the two bearing portions (16, 17).

3. Rim according to Claim 2, **characterized in that** the bearing portions (16, 17) are connected together by at least one narrowing portion (19).

4. Rim according to Claim 3, **characterized in that** the bearing portions are partially separated by at least one longitudinal opening (20) extending as far as the narrowing portion (19).

5. Rim according to Claim 4, **characterized in that** the longitudinal opening (20) is open in the direction of the transverse bridge (19) of the rim.

6. Rim according to Claim 4, **characterized in that** the longitudinal opening (20) is open in the direction opposite to the transverse bridge (19) of the rim.

7. Rim according to any one of Claims 2 to 6, **characterized in that** the bearing portions (16, 17) and the narrowing portion (19) form a single integral part.

8. Rim according to Claim 2, **characterized in that** the bearing portions form two portions that are separate and spaced from the sleeve.

9. Rim according to any one of Claims 2 to 8, **characterized in that** the separating member (24, 43) is at least one wedge inserted into an opening formed between the bearing portions.

10. Rim according to Claim 9, **characterized in that** the wedge (24) has a section with a substantially trapezoidal or conical shape.

11. Rim according to Claim 10, **characterized in that** the surfaces of engagement of the wedge form a conical angle of between 2 and 14 degrees.

12. Rim according to any one of Claims 2 to 8, **characterized in that** the separating member is formed of at least one separating screw (43).

13. Rim according to any one of the preceding claims, **characterized in that** each bearing portion (16, 17) comprises a base portion extending along the side wall of the rim and a tapered end portion (26, 27, 37, 38) which is inserted into the chamber at the intersection of the side wall and of the transverse bridge of the rim.

14. Rim according to Claim 13, **characterized in that** the tapered end portion (37, 38) and the base portion (35, 36) are connected together by a narrowed portion forming a hinge (39, 40).

15. Rim for cycle comprising a section piece of revolution (1) having, in radial section, the shape of a hollow chamber, with two end faces connected to one another, end-to-end, along a line of junction, and secured by means of a sleeve inserted into the hollow chamber of the section piece, on either side of the line of junction, the sleeve (5) comprising bearing portions (16, 17) of the sleeve which exert an internal pressure inside and against the walls of the hollow chamber, generated by the relative separation of the said portions from one another by means of at least one separating member, **characterized in that** the two bearing portions (16, 17) are connected by a connecting portion (19) of a smaller section than the two bearing portions (16, 17) and **in that** the separating member is a jamming member (5, 43) which creates a lateral separation and an irreversible jamming between the bearing portions (16, 17).

16. Wheel of a cycle comprising a rim according to any one of the preceding claims.

17. The method for manufacturing a rim comprising:
- the bending of a metal section piece comprising a chamber shape in radial section until an open rim circle is formed;
- the mounting of an expandable sleeve (5) inside each free end of the rim;
- the expanding of the sleeve by applying an essentially lateral pressure to the sleeve and,
- bringing the ends (2, 3) of the section piece together until the ends of the rim abut.

18. Method according to Claim 17, **characterized in that** the lateral pressure applied by the sleeve is greater at the intersection between the bottom of the rim and the side wall of the rim than at the intersection between the bridge and the side wall of the rim.

19. Method according to Claims 17 and 18, **characterized in that** the lateral pressure on the sleeve is applied by means of at least one wedge (5, 43) inserted into an opening (20) of the sleeve.

20. Method according to Claims 17, 18 or 19, **characterized in that** the mounting of the sleeve is carried out by leaving free, between the two ends of the rim, a portion of opening in the sleeve into which the wedge is inserted.

21. Method according to any one of Claims 17 to 20, **characterized in that** the wedge is pressed into the sleeve (5) with the aid of a press.

22. Method according to Claim 17, **characterized in that** the wedge is a deformable element (43).

23. Method according to Claim 22, **characterized in that** the deformation of the deformable element reaches the field of plastic elongation of the material forming it.

24. Method according to Claim 21, **characterized in that** the protruding portion (32) of the wedge is cut off after the wedge is pressed into the sleeve.

25. Method according to Claim 17, **characterized in that** the lateral pressure on the sleeve is applied by means of at least one screw (33) which laterally separates two bearing portions of the sleeve.

## Patentansprüche

1. Felge für ein Zweirad, umfassend ein Umdrehungsprofil (1), das im Radialschnitt die Form eines Hohlkastens hat, mit zwei Endflächen, die Stoß an Stoß entlang einer Verbindungslinie aneinandergefügt und über eine Muffe, die in den Hohlkasten des Profils beiderseits der Verbindungslinie eingesetzt ist, miteinander verbunden sind, wobei die Muffe (5) mindestens zwei Stützabschnitte (16, 17) für die Muffe umfasst, die einen inneren Druck im Inneren und gegen die Wände des Hohlkastens ausüben, der durch relative Entfernung der Abschnitte voneinander mit Hilfe mindestens eines Abstandselements erzeugt wird, **dadurch gekennzeichnet, dass** das Abstandselement (24, 33, 43) in Verbindung mit den Stützabschnitten (16, 17) ausgeführt ist, um die Stützkräfte in eine im Wesentlichen seitliche Richtung zu den Seitenwänden (7, 8) der Felge zu lenken.

2. Felge nach Anspruch 1, **dadurch gekennzeichnet, dass** das Abstandselement ein nicht umkehrbares Eingreifen in mindestens einem Raum (20, 45) zwischen den beiden Stützabschnitten (16, 17) bewirkt.

3. Felge nach Anspruch 2, **dadurch gekennzeichnet, dass** die Stützabschnitte (16, 17) miteinander durch mindestens einen Verengungsabschnitt (19) verbunden sind.

4. Felge nach Anspruch 3, **dadurch gekennzeichnet, dass** die Stützabschnitte teilweise durch mindestens eine Längsöffnung (20) getrennt sind, die sich bis zum Verengungsabschnitt (19) erstreckt.

5. Felge nach Anspruch 4, **dadurch gekennzeichnet, dass** die Längsöffnung (20) in Richtung des Quersteges (19) der Felge offen ist.

6. Felge nach Anspruch 4, **dadurch gekennzeichnet, dass** die Längsöffnung (20) in die Richtung gegen den Quersteg (19) der Felge offen ist.

7. Felge nach einem der Ansprüche 2 bis 6, **dadurch gekennzeichnet, dass** die Stützabschnitte (16, 17) und der Verengungsabschnitt (19) ein einziges ganzes Stück bilden.

8. Felge nach Anspruch 2, **dadurch gekennzeichnet, dass** die Stützabschnitte zwei getrennte und von der Muffe beabstandete Abschnitte bilden.

9. Felge nach einem der Ansprüche 2 bis 8, **dadurch gekennzeichnet, dass** das Abstandselement (24, 43) mindestens ein Winkel ist, der in eine Öffnung eingesetzt ist, die zwischen den Stützabschnitten ausgebildet ist.

10. Felge nach Anspruch 9, **dadurch gekennzeichnet, dass** der Winkel (24) einen Querschnitt von im Wesentlichen trapezförmiger oder konischer Form hat.

11. Felge nach Anspruch 10, **dadurch gekennzeichnet, dass** die Eingriffsflächen des Winkels einen Kegelwinkel zwischen 2 und 14 Grad bilden.

12. Felge nach einem der Ansprüche 2 bis 8, **dadurch gekennzeichnet, dass** das Abstandselement von mindestens einer Abstandsschraube (43) gebildet wird.

13. Felge nach einem der vorhergehenden Ansprüche, **dadurch gekennzeichnet, dass** jeder Stützabschnitt (16, 17) einen Basisabschnitt, der sich entlang der Seitenwand der Felge erstreckt, und einen sich verjüngenden Endabschnitt (26, 27, 37, 38) umfasst, der sich in den Kasten an der Schnittstelle der Seitenwand und des Quersteges der Felge einsitzt.

14. Felge nach Anspruch 13, **dadurch gekennzeichnet, dass** der sich verjüngende Endabschnitt (37, 38) und der Basisabschnitt (35, 36) miteinander durch einen verengten Abschnitt, der ein Scharnier (39, 40) bildet, verbunden sind.

15. Felge für ein Zweirad, umfassend ein Umdrehungsprofil (1), das im Radialschnitt die Form eines Hohlkastens hat, mit zwei Endflächen, die Stoß an Stoß entlang einer Verbindungslinie aneinandergefügt und über eine Muffe, die in den Hohlkasten des Profils beiderseits der Verbindungslinie eingesetzt ist, miteinander verbunden sind, wobei die Muffe (5) mindestens zwei Stützabschnitte (16, 17) für die Muffe umfasst, die einen inneren Druck im Inneren und gegen die Wände des Hohlkastens ausüben, der durch relative Entfernung der Stützabschnitte voneinander mit Hilfe mindestens eines Abstandselements erzeugt wird, **dadurch gekennzeichnet, dass** die beiden Stützabschnitte (16, 17) durch einen Verbindungsabschnitt (19) mit einem kleineren Querschnitt als die beiden Stützabschnitte (16, 17) verbunden sind, und dass das Abstandselement ein Klemmelement (5, 43) ist, das eine seitliche Entfernung und ein nicht umkehrbares Verklemmen zwischen den Stützabschnitten (16, 17) bewirkt.

16. Rad eines Zweirades, umfassend eine Felge nach einem der vorhergehenden Ansprüche.

17. Verfahren zur Herstellung einer Felge, umfassend:
- das Biegen eines metallischen Profils, umfassend im Radialschnitt die Form eines Kastens, bis ein offener Felgenkreis gebildet ist;
- die Montage einer erweiterbaren Muffe (5) im Inneren jedes freien Endes der Felge;
- die Erweiterung der Muffe, wobei eine im Wesentlichen seitliche Schubkraft auf die Muffe ausgeübt wird, und
- die Annäherung der Enden (2, 3) des Profils, bis die Felgenenden zum Anschlag gelangen.

18. Verfahren nach Anspruch 17, **dadurch gekennzeichnet, dass** die seitliche Schubkraft, die durch die Muffe ausgeübt wird, am Schnittpunkt zwischen dem Boden der Felge und der Seitenwand der Felge größer als am Schnittpunkt zwischen dem Steg und der Seitenwand der Felge ist.

19. verfahren nach den Ansprüchen 17 oder 18, **dadurch gekennzeichnet, dass** die seitliche Schubkraft auf die Muffe mit Hilfe mindestens eines Winkels (5, 43) ausgeübt wird, der in eine Öffnung (20) der Muffe eingesetzt ist.

20. Verfahren nach den Ansprüchen 17, 18 oder 19, **dadurch gekennzeichnet, dass** die Montage der Muffe dadurch erfolgt, dass zwischen den beiden Enden der Felge ein Öffnungsabschnitt in der Muffe, in den der Winkel eingesetzt wird, freigelassen wird.

21. Verfahren nach einem der Ansprüche 17 bis 20, **dadurch gekennzeichnet, dass** der Winkel in die Muffe (5) mit Hilfe einer Presse gedrückt wird.

22. Verfahren nach Anspruch 17, **dadurch gekennzeichnet, dass** der Winkel ein verformbares Element (43) ist.

23. Verfahren nach Anspruch 22, **dadurch gekennzeichnet, dass** die Verformung des verformbaren Elements den plastischen Verlängerungsbereich des dieses bildenden Materials erreicht.

24. Verfahren nach Anspruch 21, **dadurch gekennzeichnet, dass** der überstehende Abschnitt (32) des Winkels nach Einsetzen des Winkels in die Muffe mit Hilfe einer Presse abgeschnitten wird.

25. Verfahren nach Anspruch 17, **dadurch gekennzeichnet, dass** die seitliche Schubkraft auf die Muffe mit Hilfe mindestens einer Schraube (33) erfolgt, die zwei Stützabschnitte der Muffe seitlich entfernt.
